# EUROPEAN PATENT SPECIFICATION

(11) **EP 4 183 598 B1**
(45) Date of publication and mention of the grant of the patent: **23.04.2025**
(21) Application number: 22204613.8
(22) Date of filing: 31.10.2022
(51) Int. Cl.: B60C 11/03, B60C 11/12

(54) **TYRE**
LUFTREIFEN
PNEUMATIQUE

(30) Priority: 22.11.2021 JP 2021189643; 22.11.2021 JP 2021189642
(43) Date of publication of application: 24.05.2023
(73) Proprietor: Sumitomo Rubber Industries, Ltd., Kobe-shi, Hyogo 651-0072 (JP)
(72) Inventor: TAWARAHARA, Hana, Kobe-shi, 651-0072 (JP)
(74) Representative: Manitz Finsterwald Patent- und Rechtsanwaltspartnerschaft mbB

(56) References cited:
- EP-A1- 4 052 930
- WO-A1-2010/030276
- WO-A1-2020/231391
- DE-A1- 102009 044 829
- FR-A1- 2 976 852
- FR-A1- 2 989 031
- JP-A- 2005 001 593
- JP-A- 2009 166 762

## Description

### FIELD OF THE INVENTION

The present invention relates to a tyre.

### BACKGROUND OF THE INVENTION

Patent Document 1 below discloses a tyre in which hexagonal blocks are formed on the tread portion. Each hexagonal block is provided with a second sipe that crosses the hexagonal block in the tyre axial direction. The second sipe is a three-dimensional sipe. Such a tyre has reduced rolling resistance.

### PATENT DOCUMENT

[Patent document 1] Japanese Unexamined Patent Application Publication 2019-104411

### SUMMARY OF THE INVENTION

The tyre of Patent Document 1 above has room for further improvement in terms of improving wet performance.

A tyre in accordance with the preamble of claim 1 is known from JP 2009 166762 A. Related tyres are described in WO 2010/030276 A1 and FR 2 989 031 A1.

The present invention has been made in view of the above circumstances and has a major object to provide a tyre capable of improving wet performance while reducing rolling resistance.

The object is solved by a tyre having the features of claim 1. Sub-claims are directed to preferable embodiments of the invention.

In one aspect of the present invention, a tyre includes a tread portion having a ground contact surface, the tread portion being provided with a plurality of grooved sipes opening to the ground contact surface and extending in a tyre axial direction. The tread portion comprises a crown land portion located nearest to a tyre equator, a middle land portion adjacent to the crown land portion, a crown circumferential groove between the crown land portion and the middle land portion, and a shoulder circumferential groove located outwardly in a tyre axial direction of the middle land portion. The crown land portion is divided into a plurality of crown blocks by a plurality of crown lateral grooves extending across the crown land portion. The middle land portion is divided into a plurality of middle blocks by a plurality of middle lateral grooves extending across the middle land portion. The plurality of grooved sipes includes a first grooved sipe and a second grooved sipe. The first grooved sipe includes a first sipe portion and a first widening groove portion connected to an inner side of the first sipe portion in a tyre radial direction and having a greater width than that of the first sipe portion. The second grooved sipe includes a second sipe portion and a second widening groove portion connected to an inner side of the second sipe portion in the tyre radial direction and having a greater width than that of the second sipe portion. A distance h1 in the tyre radial direction from the ground contact surface to an outer end of the first widening groove portion is different from a distance h2 in the tyre radial direction from the ground contact surface to an outer end of the second widening groove portion. Each crown block is provided with a single first grooved sipe, i.e. each crown block is provided with a grooved sipe only and said grooved sipe is a first grooved sipe. Each middle block is provided with a single second grooved sipe, i.e. each middle block is provided with a grooved sipe only and said grooved sipe is a second grooved sipe.

According to an embodiment of the invention, each of the first sipe portion and the second sipe portion has a width that closes under a normal load condition, and each of the first widening groove portion and the second widening groove portion has a width that does not close under the normal load condition.

According to an embodiment of the invention, the distance h1 is in a range of from 110% to 150% of the distance h2.

According to an embodiment of the invention, a groove width of the crown circumferential groove is smaller than a groove width of the shoulder circumferential groove.

According to an embodiment of the invention, the first grooved sipe and the second grooved sipe are in communication with the crown circumferential groove.

According to an embodiment of the invention, the crown circumferential groove comprises an outer portion extending inwardly in the tyre radial direction from the ground contact surface, and an inner portion connected to an inner side of the outer portion in the tyre radial direction and having a widening portion whose groove width continuously increases inwardly in the tyre radial direction.

According to an embodiment of the invention, the outer portion has a groove width that decreases inwardly continuously in the tyre radial direction.

According to an embodiment of the invention, the crown circumferential groove comprises a narrow groove portion and a widening portion, wherein the narrow groove portion has a groove width that closes at least partially under a normal load condition of the tyre, the widening portion is connected to a radial inner edge of the narrow groove portion, the widening portion has a groove width larger than a groove width of the narrow groove portion, and the groove width of the widening portion does not close under the normal load condition.

According to an embodiment of the invention, a length in the tyre radial direction of the widening portion is greater than the groove width of the widening portion.

According to an embodiment of the invention, the crown circumferential groove has a connecting position between the narrow groove and the widening portion, wherein the connecting position is located by a third distance in the tyre radial direction from the ground contact surface, and the distance h1 and the distance h2 is in a range of from 100% to 150% of the third distance.

According to an embodiment of the invention, lengths in the tyre radial direction of the first and second widening groove portions are smaller than a length in the tyre radial direction of the widening portion of the crown circumferential groove.

According to an embodiment of the invention, a length in the tyre radial direction of the first widening groove portion and the second widening groove portion is in a range of from 30% to 50% of a length in the tyre radial direction of the widening portion of the crown circumferential groove.

### BRIEF DESCRIPTION OF THE DRAWINGS

FIG. 1 is a plan view for conceptually explaining an embodiment of the tread portion according to the first embodiment;
FIG. 2A is a cross-sectional view of a first grooved sipe in FIG. 1;
FIG. 2B is a cross-sectional view of a second grooved sipe in FIG. 1;
FIG. 3 is a plan view of the tread portion according to the first embodiment;
FIG. 4A is a cross-sectional view taken along the line A-A of FIG. 3;
FIG. 4B is a cross-sectional view taken along the line B-B of FIG. 3;
FIG. 5 is a plan view of the tread portion according to the first embodiment;
FIG. 6A is a plan view of a middle block;
FIG. 6B is a cross-sectional view taken along the line C-C of FIG. 6A;
FIG. 7 is a plan view of the tread portion according to a not claimed embodiment;
FIG. 8 is a partial perspective view of a tread portion according to the second embodiment;
FIG. 9 is a cross-sectional view showing the tread portion under the normal load condition according to the second embodiment;
FIG. 10 is a perspective view of the tread portion corresponding neither to a crown block nor to a middle block having a plurality of grooved sipes with different distances;
FIG. 11 is a cross-sectional view of the tread portion of FIG. 10 under the normal load condition;
FIG. 12 is a plan view of a modification of the grooved sipe of FIG. 10;
FIG 13 is a perspective view of a modification of the tread portion of FIG 10;
FIG 14 is a plan view of the tread portion of FIG 13;
FIG 15 is a perspective view of a modification of the tread portion of FIG 13; and
FIG 16 is a plan view of the tread portion including the configuration of FIG 15.

### DETAILED DESCRIPTRION OF THE INVENTION

One or more embodiments of the present invention will be described below with reference to the drawings. Note that throughout the embodiments, the same or common elements are denoted the same reference numbers and the duplicated explanation may be omitted.

### [First embodiment]

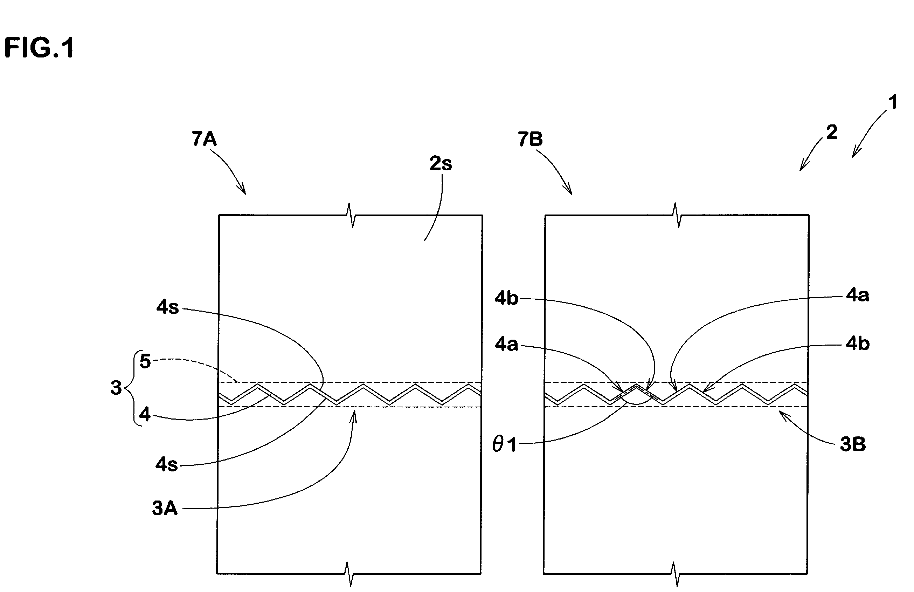

FIG. 1 is a plan view for conceptually explaining a tread portion 2 of a tyre 1 according to the first embodiment of the present invention. The tyre 1 of the present invention, for example, is used as a heavy-duty pneumatic tyre. Alternatively, the tyre 1 of the present invention may be used, for example, as pneumatic tyres for passenger cars or motorcycles, or a non-pneumatic tyre in which the compressed air is not filled therein.

As illustrated in FIG. 1, in the present embodiment, the tread portion 2 is provided with a plurality of grooved sipes 3 opening to the ground contact surface 2s of the tread portion 2 and extending in the tyre axial direction. As used herein, the ground contact surface 2s corresponds to a ground contacting patch of the tyre 1 which occurs under a normal load condition such that the tyre 1 under a normal state is grounded on a plane with a standard tyre load at zero camber angles. As used herein, the "normal state" is such that the tyre 1 is mounted onto a standard wheel rim with a standard pressure but loaded with no tyre load. As used herein, unless otherwise noted, dimensions of portions of the tyre are values measured under the normal state.

As used herein, the "standard wheel rim" is a wheel rim officially approved for each tyre by standards organizations on which the tyre is based, wherein the standard wheel rim is the "standard rim" specified in JATMA, the "Design Rim" in TRA, and the "Measuring Rim" in ETRTO, for example.

As used herein, the "standard pressure" is a standard pressure officially approved for each tyre by standards organizations on which the tyre is based, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As used herein, the "standard tyre load" is a tyre load officially approved for each tyre by the standards organization in which the tyre is based, wherein the standard tyre load is the "maximum load capacity" in JATMA, the maximum value given in the above-mentioned table in TRA, and the "Load Capacity" in ETRTO, for example. However, if a tyre is a passenger car tyre, the standard tyre load of the tyre, for example, is a load corresponding to 88% of the above-mentioned load.

The plurality of the grooved sipes 3 includes a first grooved sipe 3A and a second grooved sipe 3B.

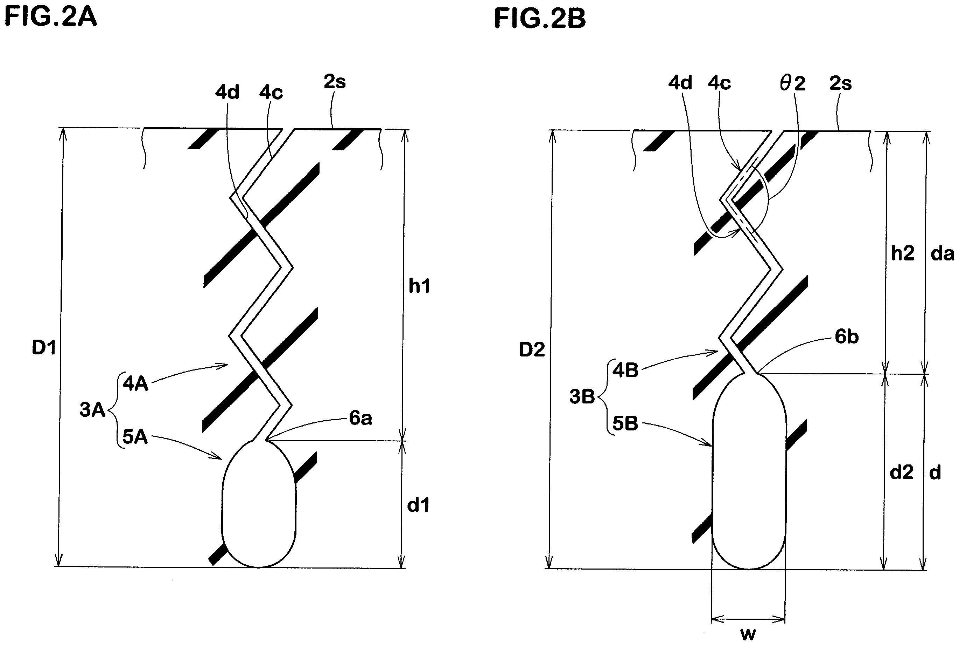

FIG. 2A is a cross-sectional view of the first grooved sipe 3A, and FIG. 2B is a cross-sectional view of the second grooved sipe 3B. As illustrated in FIGS. 2A and 2B, the first grooved sipe 3A includes a first sipe portion 4A and a first widening groove portion 5A connected to an inner side of the first sipe portion 4A in the tyre radial direction and having a greater width than that of the first sipe portion 4A. The second grooved sipe 3B includes a second sipe portion 4B and a second widening groove portion 5B connected to an inner side of the second sipe portion 4B in the tyre radial direction and having a greater width than that of the second sipe portion 4B. The first and second grooved sipes 3A and 3B can discharge a lot of water on the ground contact surface 2s by the first widening groove portion 5A and the second widening groove portion 5B, and thus can improve wet performance.

A distance h1 in the tyre radial direction from the ground contact surface 2s to an outer end 6a of the first widening groove portion 5A is different from a distance h2 in the tyre radial direction from the ground contact surface 2s to an outer end 6b of the second widening groove portion 5B. As a result, when the tread wear progresses, the first widening groove portion 5A and the second widening groove portion 5B do not appear on the ground contact surface 2s at the same time. Thus, a large decrease in rigidity of the tread portion 2 can be suppressed, and rolling resistance performance can be maintained.

As illustrated in FIG. 1, the grooved sipes 3 according to the present embodiment include sipe portions 4 (4A, 4B) and widening groove portions 5 (5A, 5B) connected to the inner side of the sipe portions 4 in the tyre radial direction and having a width greater than that of the sipe portions 4. Such grooved sipes 3 can improve wet performance by the widening groove portions 5. Further, by varying the distances h1 and h2 in the tyre radial direction from the ground contact surface 2s to the widening groove portions 5, it is possible to improve rolling resistance performance. As used herein, the sipe portions 4A and 4B, and the sipes described later refer to an incision having a width of less than 1.5 mm. In addition, the widening groove portions 5A and 5B, and the grooves described later refer to a groove-shaped portion having a groove width equal to or more than 1.5 mm.

The tread portion 2, for example, includes a first land portion 7A and a second land portion 7B that is located at a different position in the tyre axial direction from the first land portion 7A. The first land portion 7A is provided with one or more first grooved sipes 3A, and the second land portion 7B is provided with one or more second grooved sipes 3B. As a result, it is possible to suppress a large decrease in rigidity of the first land portion 7A and the second land portion 7B, where different ground contact pressures act.

Each of the first land portion 7A and the second land portion 7B is formed as a block row in which a plurality of blocks is arranged in the tyre circumferential direction. Further, in the present embodiment, the first land portion 7A and the second land portion 7B are provided with a single first grooved sipe 3A and a single second grooved sipe 3B, respectively. Alternatively, the first land portion 7A and the second land portion 7B may be provided with a plurality of first grooved sipe 3A and a plurality of second grooved sipe 3B, respectively.

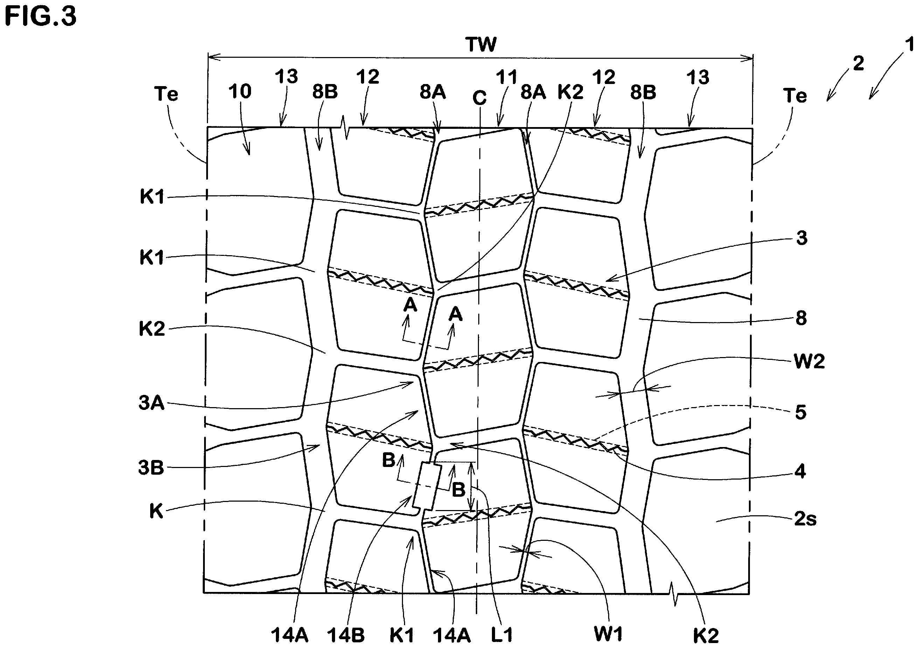

FIG. 3 is a plan view of the tread portion 2 according to the first embodiment. As illustrated in FIG. 3, the tread portion 2, for example, includes a plurality of circumferential grooves 8 extending continuously in the tyre circumferential direction and land portions 10 divided by the circumferential grooves 8.

In the present embodiment, the circumferential grooves 8 include a pair of crown circumferential grooves 8A between which the tyre equator C is located, and a pair of shoulder circumferential grooves 8B between which the pair of crown circumferential grooves 8A is located. Hence, the land portions 10 according to the present embodiment include a crown land portion 11, a pair of middle land portions 12 adjacent to the crown land portion 11 outwardly in the tyre axial direction, and a pair of shoulder land portions 13 adjacent to the middle land portions 12 outwardly in the tyre axial direction The crown land portion 11 is located nearest to the tyre equator C among the land portions 10, and the tyre equator C is located on the crown land portion 11, for example. The shoulder land portions 13 include respective tread edges Te. The tread edges Te are axially outermost edge of the ground contact patch under the normal load condition. The axial distance between the tread edges Te is defined as the tread width TW.

Each of the crown circumferential groove 8A and the shoulder circumferential grooves 8B extends in a zigzag shape in the tyre circumferential direction so as to form a plurality of zigzag vertexes K. The vertexes K include outward vertexes K1 protruding outwardly in the tyre axial direction and inward vertexes K2 protruding inwardly in the tyre axial direction. Note that the crown circumferential grooves 8A and the shoulder circumferential grooves 8B are not limited to such a zigzag shape, and may extend linearly or wavily.

Preferably, a groove width W1 of the crown circumferential grooves 8A is smaller than a groove width W2 of the shoulder circumferential grooves 8B. In such a configuration, it is possible that the crown land portion 11 and the middle land portions 12 can support each other due to the deformation of the land portions 11 and 12 when the tyre 1 travels. This can increase the apparent rigidity of the crown land portion 11 on which a large ground contact pressure acts, and can improve rolling resistance performance. In order to further improve the above-mentioned effect, the groove width W1 of the crown circumferential grooves 8A is preferably equal to or more than 1% of the groove width W2 of the shoulder circumferential grooves 8B, more preferably equal to or more than 5%, and preferably equal to or less than 20% of the groove width W2 of the shoulder circumferential grooves 8B, more preferably equal to or less than 15%. Further, the groove width W2 of the shoulder circumferential grooves 8B is preferably equal to or less than 3% of the tread width TW, more preferably equal to or more than 4%, and preferably equal to or less than 7% of the tread width TW, more preferably equal to or less than 6%. The groove widths W1 of the crown circumferential grooves 8A and the groove width W2 of the shoulder circumferential grooves 8B are measured on the ground contact surface 2s.

Each crown circumferential groove 8A includes a first portion 14A and a second portion 14B having a greater groove width at the ground contact surface 2s than that of the first portion 14A. The second portion 14B, for example, is formed between one of the outward vertexes K1 and one of the inward vertexes K2 which are adjacent with each other in the tyre circumferential direction, and terminates without connecting to the outward vertex K1 and the inward vertex K2. Although not particularly limited, a length L1 of the second portion 14B in the tyre circumferential direction is preferably equal to or more than 5%, more preferably equal to or more than 7% of the tread width TW, and preferably equal to or less than 15%, more preferably equal to or less than 12% of the tread width TW. Alternatively, the second portion 14B can be placed in any positions.

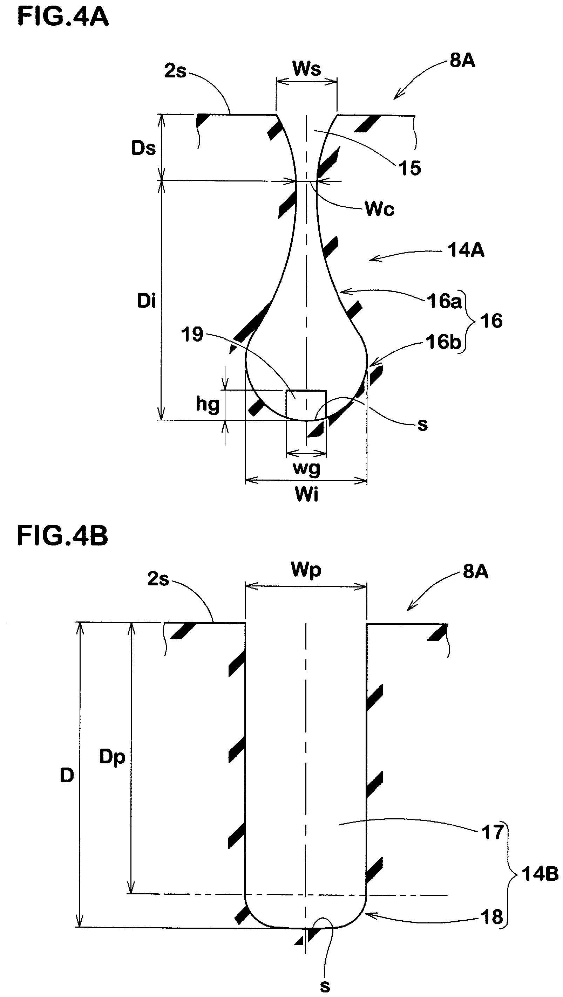

FIG. 4A is a cross-sectional view taken along the line A-A of FIG. 3, and FIG. 4A illustrates a cross-sectional view of the first portion 14A. As illustrated in FIG. 4A, the first portion 14A, for example, includes an outer portion 15 and an inner portion 16. In the present embodiment, the outer portion 15 extends inwardly in the tyre radial direction from the ground contact surface 2s. The outer portion 15, in the present embodiment, has a groove width decreasing inwardly in the tyre radial direction. In the present embodiment, each inner portion 16 is connected to an inner side of each outer portion 15 in the tyre radial direction and has a widening portion 16a whose groove width continuously increases inwardly in the tyre radial direction. The inner portion 16, for example, further includes a narrowed portion 16b that is connected to an inner side of the widening portion 16a and whose groove width decreases continuously inwardly in the tyre vertexes radial direction.

The maximum width Wi of the inner portion 16 is greater than the maximum width Ws of the outer portion 15. The first portion 14A can improve wet performance while improving rolling resistance performance in an area where the groove width is minimized. The maximum groove width Ws of the outer portions 15 corresponds to the groove width W1 of the crown circumferential groove 8A. In other words, the maximum groove width Ws of the outer portions 15 is formed at the ground contact surface 2s. The maximum groove width Wi of the inner portion 16 is formed at the boundary between the widening portion 16a and the narrowed portion 16b.

In the present embodiment, a length Ds in the tyre radial direction of the outer portion 15 is smaller than a length Di in the tyre radial direction of the inner portion 16. The length Ds of the outer portion 15 is preferably equal to or more than 20% of the length Di of the inner portion 16, more preferably equal to or more than 25%, and preferably equal to or less than 40% of the length Di of the inner portion 16, more preferably equal to or less than 35%.

Although not particularly limited, the minimum groove width Wc of the crown circumferential groove 8A is, for example, in a range of from 1.0 to 1.5mm. The minimum groove width Wc is formed at the boundary between the widening portion 16a and the outer portion 15. The minimum groove width Wc is preferably equal to or more than 10% of the maximum groove width Ws of the outer portion 15, more preferably equal to or less than 15%, and preferably equal to or less than 30% less, more preferably equal to or less than 25% of the outer portion 15.

FIG. 4B is a cross-sectional view taken along the line B-B of FIG. 3, and FIG. 4B illustrates a cross-sectional view of the second portion 14B. As illustrated in FIG. 4B, the second portion 14B consists of a constant width portion 17 extending inwardly in the tyre radial direction with the same groove width from the ground contact surface 2s and a second reduced width portion 18 disposed between the constant width portion 17 and the groove bottom s and having a groove width decreasing inwardly in the tyre radial direction. A length Dp in the tyre radial direction of the constant width portion 17 is preferably equal to or more than 80%, more preferably equal to or more than 85%, of a groove depth D of the second portion 14B. A groove width Wp of the constant width portion 17 is, for example, the same as the maximum groove width Wi of the inner portion 16 of the first portion 14A. The groove depth D of the second portion 14B is the same as the groove depth (Di+Ds) of the first portion 14A.

As illustrated in FIG. 4A, the groove bottom (s) of each crown circumferential groove 8A is provided with one or more raised portions 19 in which a localized part of the groove bottom raises outwardly in the tyre radial direction. The raised portions 19 can prevent pebbles from getting caught in the crown circumferential groove 8A when the wear progresses and the inner portion 16 becomes exposed, thus improving wet performance. A width wg in the tyre axial direction of the raised portions 19 is preferably equal to or more than 0.1 times the maximum groove width Wi of the inner portion 16, more preferably equal to or more than 0.2 times, and preferably equal to or less than 0.5 times the maximum groove width Wi of the inner portion 16, more preferably equal to or less than 0.4 times. Further, a height hg in the tyre radial direction of the raised portions 19 is preferably equal to or more than 0.1 times the length Di of the inner portions 16, more preferably equal to or more than 0.2 times, and preferably equal to or less than 0.5 times, more preferably equal to or less than 0.4 times.

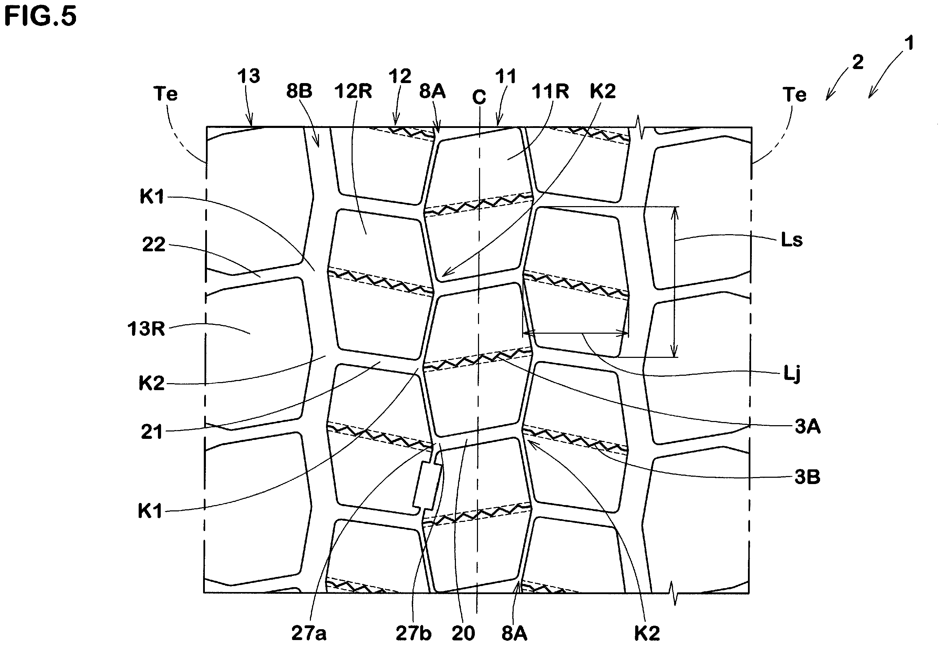

FIG. 5 is a plan view of the tread portion 2. As illustrated in FIG. 5, the crown land portion 11 is divided into a plurality of crown blocks 11R by a plurality of crown lateral grooves 20 extending across the crown land portion 11. In the present embodiment, each middle land portion 12 is divided into a plurality of middle blocks 12R by a plurality of middle lateral grooves 21 extending across the middle land portion 12. In the present embodiment, each shoulder land portion 13 is divided into a plurality of shoulder blocks 13R by a plurality of shoulder lateral grooves 22 extending across the shoulder land portion 13.

The crown lateral grooves 20, for example, connect the pair of crown circumferential groove 8A. The crown lateral grooves 20, in the present embodiment, connect the inward vertexes K2 of the crown circumferential grooves 8A. The crown lateral grooves 20, for example, extend in a straight manner. As a result, each crown block 11R is formed into a barrel-typed hexagonal shape with a central portion in the tyre circumferential direction protruding toward both sides in the tyre axial direction when viewed from a top of the tread portion.

The middle lateral grooves 21, for example, connect the crown circumferential grooves 8A with the shoulder circumferential grooves 8B. The middle lateral grooves 21, in the present embodiment, connect the outward vertexes K1 of the crown circumferential grooves 8A with the inward vertexes K2 of the shoulder circumferential grooves 8B. The middle lateral grooves 21, for example, extend in a straight manner. As a result, each middle block 12R is formed into a barrel-typed hexagonal shape with a central portion in the tyre circumferential direction protruding toward both sides in the tyre axial direction when viewed from a top of the tread portion.

The shoulder lateral grooves 22, for example, connect the shoulder circumferential grooves 8B with the tread edges Te. The shoulder lateral grooves 22, in the present embodiment, are connected to the outward vertexes K1 of the shoulder circumferential grooves 8B. The shoulder lateral grooves 22, for example, extend in a straight manner. As a result, each shoulder block 13R is formed into a pentagonal shape with a central portion in the tyre circumferential direction protruding inwardly in the tyre axial direction when viewed from a top of the tread portion.

The crown land portion 11 is provided with one first grooved sipe 3A. The middle land portions 12 is provided with one second grooved sipe 3B. In other words, the first land portion 7A is the crown land portion 11 and the second land portion 7B is each middle land portion 12. When straight driving, the crown land portion 11 receives a larger ground contact pressure than the middle land portions 12. And, the distance h1 of the first grooved sipe 3A (shown in FIG. 2A) is formed larger than the distance h2 of the second grooved sipe 3B. As a result, the decrease in rigidity of the crown land portion 11, which may be subject to receive a large ground contact pressure, can be suppressed, further improving rolling resistance performance. Note that no grooved sipes are provided on the shoulder land portions 13 of this embodiment.

When the distance h1 is excessively larger than the distance h2, wet performance may deteriorate. Thus, the distance h1 is preferably equal to or more than 105% of the distance h2, more preferably equal to or more than 110%, and preferably equal to or less than 130% of the distance h2, more preferably equal to or less than 125%. The distance h1, for example, is preferably in a range of from 4.5 to 10.5 mm.

As illustrated in FIGS. 2A and 2B, in the present embodiment, a length d1 in the tyre radial direction of the first widening groove portion 5A is smaller than a length d2 in the tyre radial direction of the second widening groove portion 5B. As a result, excessive decrease in rigidity of the land portion 10 due to the first grooved sipe 3A and the second grooved sipe 3B can be suppressed, and high rolling resistance performance can be maintained. Further, a ratio (d1/Di) between the length d1 of the first widening groove portion 5A and the length Di of the inner portion 16 of each crown circumferential groove 8A is preferably equal to or more than 0.30, more preferably equal to or more than 0.35, and preferably equal to or less than 0.50, more preferably equal to or less than 0.45. Furthermore, a ratio (d2/Di) between the length d2 of the second widening groove portion 5B and the length Di of the inner portion 16 is preferably equal to or more than 0.4, more preferably equal to or more than 0.45, and preferably equal to or less than 0.6, more preferably equal to or less than 0.55. More preferably, the length d1 of the first widening groove portion 5A, for example, is in a range of from 4.5 to 10.5 mm.

For example. an absolute value of the difference [D1 - D2| between the depth D1 of the first grooved sipe 3A and the depth D2 of the second grooved sipe 3B is preferably equal to or less than 3 mm, more preferably equal to or less than 2 mm, still further preferably equal to or less than 1mm. The depth D1 of the first grooved sipe 3A is the same as the depth D2 of the second grooved sipe 3B in this embodiment.

As illustrated in FIG. 1 and FIG. 2, the sipe portions 4 (4A and 4B), in the present embodiment, extend in a zigzag manner in an extension direction of the sipe. In addition, the sipe portions 4 (4A and 4B), for example, extend in a zigzag manner in the tyre radial direction. Thus, the sipe portions 4 (4A and 4B9 are formed as a so-called three-dimensional sipe. Since such sipe portions 4 each have a pair of sipe walls 4s that repeat unevenness, these sipe walls can engage with each other firmly when the tyre 1 travels. As a result, the apparent rigidity of the tread portion 2 formed by the grooved sipes 3 can increase, suppressing the deformation of the tread portion 2, further improving rolling resistance performance.

In a tread plan view, each sipe portion 4 includes first elements 4a inclined in a first direction with respect to the extension direction of the sipe and second elements 4b inclined in the opposite direction to the first elements 4a. An angle θ1 between the adjacent first element 4a and the second element 4b is preferably equal to or more than 100 degrees, more preferably equal to or more than 105 degrees, and preferably equal to or less than 125 degrees, more preferably equal to or less than 120 degrees. Such sipe portions 4 can effectively exert the above-mentioned effect.

As illustrated in FIGS. 2A and 2B, in a cross-sectional view of the grooved sipes 3, each of the sipe portions 4A and 4B includes first segments 4c inclined in a first direction with respect to the tyre radial direction and second segments 4d inclined in the opposite direction to the first segments 4c. An angle q2 between the adjacent first segment 4c and second segment 4d is preferably equal to or more than 100 degrees, more preferably equal to or more than 105 degrees, and preferably equal to or less than 125 degrees, more preferably equal to or less than 120 degrees.

In the present embodiment, the widening groove portions 5 (5A and 5B) have an oval or elliptical cross-sectional shape. Each widening groove portion 5, for example, has an elongated elliptical shape with a major diameter in the tyre radial direction. Such widening groove portions 5 can suppress the decrease in rigidity of the tread portion 2 in the tyre radial direction and maintain high rolling resistance performance. In order to effectively exhibit such effect, each widening groove portion 5 has a ratio (w/d) of a length d in the tyre radial direction thereof to a width w thereof being preferably equal to or more than 0.40, more preferably equal to or more than 0.45, and preferably equal to or less than 0.60, more preferably equal to or less than 0.55.

Although not particularly limited, each grooved sipe 3 (3A and 3B) has a ratio (d/da) between a length da of the sipe portion 4 (4A, 4B) in the tyre radial direction to a length d of the widening groove portion 5 (5A, 5B) in the tyre radial direction is preferably equal to or more than 0.25, more preferably equal to or more than 0.30, and preferably equal to or less than 0.45, more preferably equal to or less than 0.40.

As illustrated in FIG. 5, each crown block 11R is provided with a single first grooved sipe 3A. Each first grooved sipe 3A, for example, connects the axially adjacent outward vertexes K1 of the pair of crown circumferential grooves 8A. Each middle block 12R is provided with a single second grooved sipe 3B. Each second grooved sipe 3B, for example, connects the inward vertexes K2 of the crown circumferential groove 8A with the outward vertexes of the shoulder circumferential groove 8B which are adjacent with each other on each side of the tyre equator C.

In the present embodiment, the second grooved sipes 3B overlap the respective crown lateral grooves 20 in the tyre circumferential direction on each side of the tyre equator C. For example, openings 27a of the second grooved sipes 3B on a crown circumferential groove 8A side are located in the same circumferential positions as openings 27b of the respective crown lateral grooves 20 on the crown circumferential groove 8A side. As a result, the water in the crown lateral grooves 20 can flow through one or more second grooved sipes 3B to either or both shoulder circumferential grooves 8B, and wet performance can be improved.

Each of the crown blocks 11R, the middle blocks 12R, and the shoulder blocks 13R has a vertically elongated shape in which the maximum length Ls in the tyre circumferential direction thereof is greater than the maximum length Lj in the tyre axial direction thereof. Each of these blocks 11R to 13R has a large rigidity in the tyre circumferential direction and can exhibit excellent rolling resistance performance. When the maximum length Ls in the tyre circumferential direction of each block 11R to 13R is excessively larger than the maximum length Lj in the tyre axial direction, the rigidity in the tyre axial direction may decrease. Thus, the ratio (Ls/Lj) of the maximum length Ls in the tyre circumferential direction to the maximum length Lj in the tyre axial direction is preferably equal to or more than 1.2, more preferably equal to or more than 1.3, and preferably equal to or less than 1.8, more preferably equal to or less than 1.7.

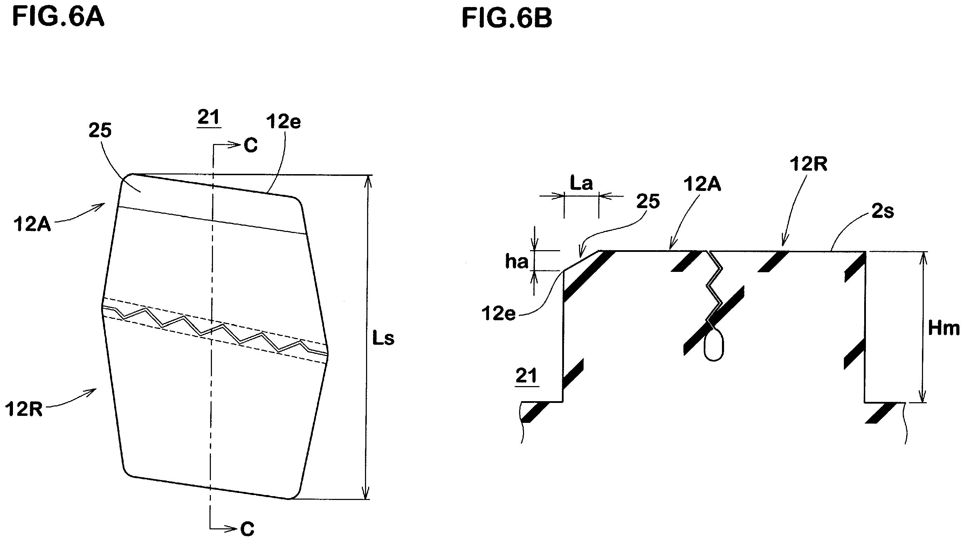

FIG. 6A is a plan view of one of the middle blocks 12R. FIG. 6B is a cross-sectional view taken along the line C-C of FIG. 6A. In FIG. 6B, a cross-section of the middle block 12R parallel to the tyre circumferential direction is shown. As illustrated in FIGS. 6A and 6B, in the present embodiment, the middle block 12R includes an end portion 12A including an edge 12e in the tyre circumferential direction. For example, the end portion 12A is provided with an inclined surface 25 that continuously inclines inwardly in the tyre radial direction toward the edge 12e. Such an inclined surface 25 can smoothly discharge water on the ground contact surface 2s of the middle block 12R to the adjacent middle lateral groove 21.

A length La of the inclined surface 25 in the tyre circumferential direction is preferably equal to or more than 0.1 times the maximum tyre circumferential length Ls of the middle block 12R, more preferably equal to or more than 0.15 times, and preferably equal to or less than 0.25 times the maximum tyre circumferential length Ls of the middle block 12R, more preferably equal to or less than 0.20 times. The length ha of the inclined surface 25 in the tyre radial direction is preferably equal to or more than 0.1 times the maximum height Hm of the middle blocks 12R in the tyre radial direction, more preferably equal to or more than 0.2 times or more, and preferably equal to or less than 0.5 times the maximum height Hm, more preferably equal to or less than 0.4 times.

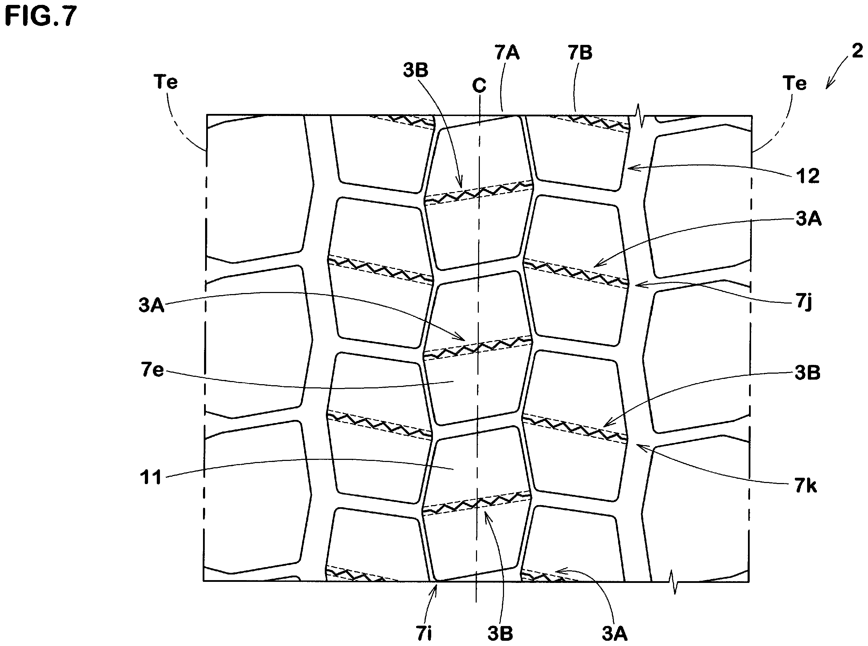

FIG. 7 is a plan view of an example of the tread portion 2 in accordance with a not claimed embodiment. The tread portion 2 is provided with the first land portion 7A. In this example, the first land portion 7A is provided with at least one first grooved sipe 3A and at least one second grooved sipe 3B. In this example, the first land portion 7A is the crown land portion 11. The crown land portion 11 is the land area where relatively large ground contact pressure acts when driving straight ahead. By providing the first grooved sipe 3A and the second grooved sipe 3B on the crown land portion 11, the different widening groove portions 5A and 5B in the crown land portion 11 appear in the tyre circumferential direction, thereby improving the rolling resistance performance.

The first land portion 7A includes at least one first block 7e and at least one second block 7i in the tyre circumferential direction. In this example, the first block 7e is provided with a single first grooved sipe 3A, and the second block 7i is provided with a single second grooved sipe 3B, for example. Note that the first land portion 7A may be provided with one or more third sipes (not illustrated) which include the sipe portion 4 and the widening groove portions 5. In each third grooved sipe, the distance from the ground contact surface 2s to the outer end of the widening groove portion 5 in the tyre radial direction is different from the distance h1 of the first grooved sipe 3A and the distance h2 of the second grooved sipe 3B.

In this example, the tread portion 2 include one or more second land portions 7B. The second land portions 7B, for example, are the middle land portions 12. Each second land portion 7B includes at least one first block 7j and at least one second block 7k in the tyre circumferential direction. In this example, the first block 7j is provided with a single first grooved sipe 3A, and the second block 7k is provided with a single second grooved sipe 3B, for example.

### [Second embodiment]

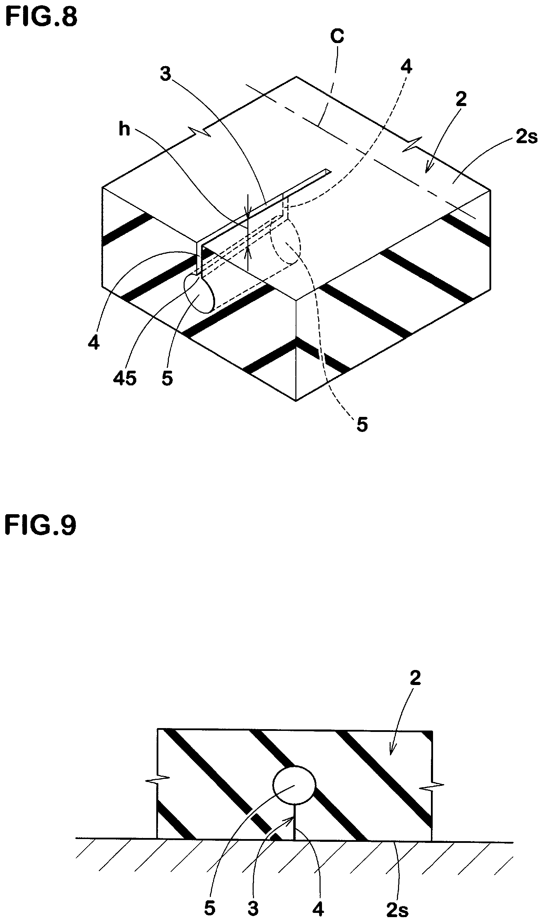

FIG. 8 is a partial perspective view of the tread portion 2 according to the second embodiment.

The tread portion 2 is provided with a plurality of grooved sipes 3 extending in the tyre axial direction (i.e., a direction intersecting the tyre equator C). The grooved sipes 3 may not only be parallel to the tyre axial direction, but may also be inclined with respect to the tyre axial direction.

Each grooved sipe 3 includes the sipes portion 4 and the widening groove portion 5.

The sipe portion 4 opens at the ground contact surface 2s of the tread portion 2. The sipe portion 4 has a groove width that closes when the tyre is under the normal load condition.

As mentioned above, the "normal load condition" is such that the tyre 1 under the normal state is grounded on a plane with a standard tyre load at zero camber angles.

The widening groove portion 5 is connected to the inner end of the sipe portion 4 in the tyre radial direction. The widening groove portion 5 has a groove width that is larger than the groove width of the sipe portion 4 and does not close under the normal load condition. The groove width of the sipe portion 4 is, for example, less than 1.5 mm, and the groove width of the widening groove portion 5 is, for example, equal to or more than 1.5 mm.

FIG. 9 is a partial cross-sectional view showing the tread portion 2 under the normal load condition. When a standard tyre load is applied, the sipe portion 4 is closed and the rigidity of the tread portion 2 in the tyre circumferential direction can be increased. The deformation of the tread portion 2 can be suppressed and the rolling resistance can be reduced.

In the tyre according to this embodiment, the sipe portion 4 closes under the normal load condition at the initial stage of wear of the tread portion 2. Thus, the deformation of the tread portion 2 can be suppressed and rolling resistance can be reduced. On the other hand, when the wear of the tread portion 2 progresses, the widening groove portion 5 that does not close even when the standard tyre load is applied appears on the ground contact surface 2s, improving drainage performance.

In this embodiment, a distance h in the tyre radial direction from the ground contact surface 2s of the tread portion 2 to a connected position 45 between the sipe portion 4 and the widening groove portion 5 is non-constant in the extension direction of the grooved sipe 3. In such a grooved sipe 3, the sipe portion 4 and the widening groove portion 5 coexist on the ground contact surface 2s as the wear of the tread portion 2 progresses. As a result, well-balanced fuel efficiency and wet performance can be obtained regardless of the progress of wear.

Note that the distance h is "non-constant in the extension direction" means that the distance h is not constant in the extension direction of the grooved sipe 3 (in other words, in the tyre axial direction). Thus, the distance h may change continuously or stepwise in the extension direction of the grooved sipe 3. Further, as illustrated in FIG. 8, the grooved sipe 3 is not limited to a form in which the distance h varies, and a plurality of grooved sipes 3 with different distances h may be formed in the tread portion 2.

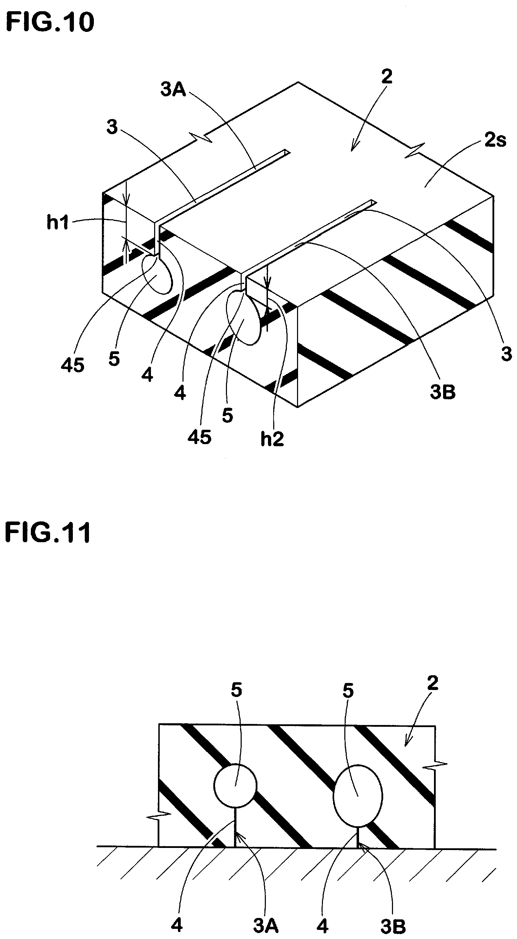

FIG. 10 partially shows the tread portion 2 corresponding neither to a crown block nor to a middle block. In the tread portion 2 of FIG. 10 a plurality of grooved sipes 3 with different distances h are formed. That is, the grooved sipes 3 include the first grooved sipe 3A and the second grooved sipe 3B.

The first grooved sipe 3A is a grooved sipe 3 that has a connected position 45 located by a distance h1 in the tyre radial direction from the ground contact surface 2s. The second grooved sipe 3B is a grooved sipe 3 that has a connected position 45 located by a distance h2 in the tyre radial direction from the ground contact surface 2s. The distance h1 and the distance h2 themselves may be constant or non-constant.

In FIG. 10, the distance h1 is greater than the distance h2. Thus, as the wear progresses, the widening groove portion 5 of the second grooved sipe 3B appears first on the ground contact surface 2s of the tread portion 2, improving wet performance. At this time, the sipe portion 4 of the first grooved sipe 3A opens to the ground contact surface 2s. The sipe portion 4 of the first grooved sipe 3A closes under the normal load condition, suppressing the deformation of the tread portion 2. As a result, well-balanced fuel efficiency and wet performance can be obtained regardless of the progress of wear.

FIG. 11 is a partial cross-sectional view of the tread portion 2 of FIG. 10 under the normal load condition. When the standard tyre load is applied, the sipe portions 4 of the first grooved sipe 3Aand the second grooved sipe 3B are closed, and the rigidity of the tread portion 2 in the tyre circumferential direction can be increased. This can suppress deformation of the tread portion 2 and reduce rolling resistance.

In the tyre according to this embodiment, since the sipe portions 4 of the first grooved sipe 3A and the second grooved sipe 3B are closed by the standard tyre load at an initial stage of wear of the tread portion 2, the deformation of the tread portion 2 can be suppressed and the rolling resistance can be reduced. On the other hand, as the wear of the tread portion 2 progresses, the widening groove portions 5 which do not close even when the standard tyre load is applied eventually appears, improving drainage performance.

In FIG. 10 and FIG. 11, the grooved sipes 3 include the first grooved sipe 3A and the second grooved sipe 3B in which the connected positions 45 between the sipe portions 4 and the widening groove portions 5 are different. Thus, it is possible to shift the timing at which the widening groove portions 5 appear in the first grooved sipe 3A and the second grooved sipe 3B as the wear progresses. Therefore, well-balanced fuel efficiency and wet performance can be obtained regardless of the progress of wear.

Preferably, the tread portion 2 may include a plurality of first grooved sipes 3A and a plurality of second grooved sipes 3B which are arranged alternately in the tyre circumferential direction. As a result, the tread portion 2 during driving, the first grooved sipe 3A and the second grooved sipe 3B alternately come into contact with the ground, resulting in better balanced fuel efficiency and wet performance.

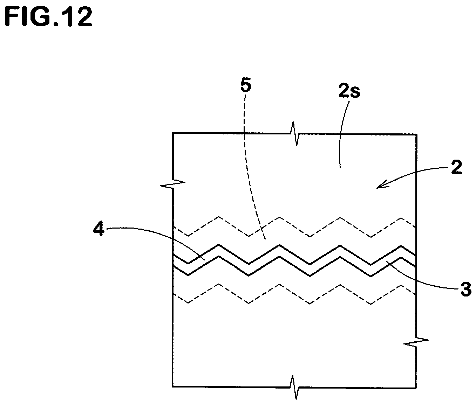

FIG. 12 illustrates a variation of the grooved sipes 3 of FIG. 8. As illustrated in FIG. 12, the grooved sipe 3 may extend in a zigzag manner. The grooved sipes 3 shown in FIG. 10, that is, the first grooved sipe 3A and the second grooved sipe 3B, may also extend in a zigzag manner. In the grooved sipes 3 having such a configuration, the sipe portions 4 are closed by a standard tyre load, thereby increasing the rigidity of the tread portion 2 in the tyre circumferential direction and the tyre axial direction, further improving the fuel efficiency. In the grooved sipes 3, the sipe portions 4 may extend zigzag and the widening groove portions 5 may extend linearly.

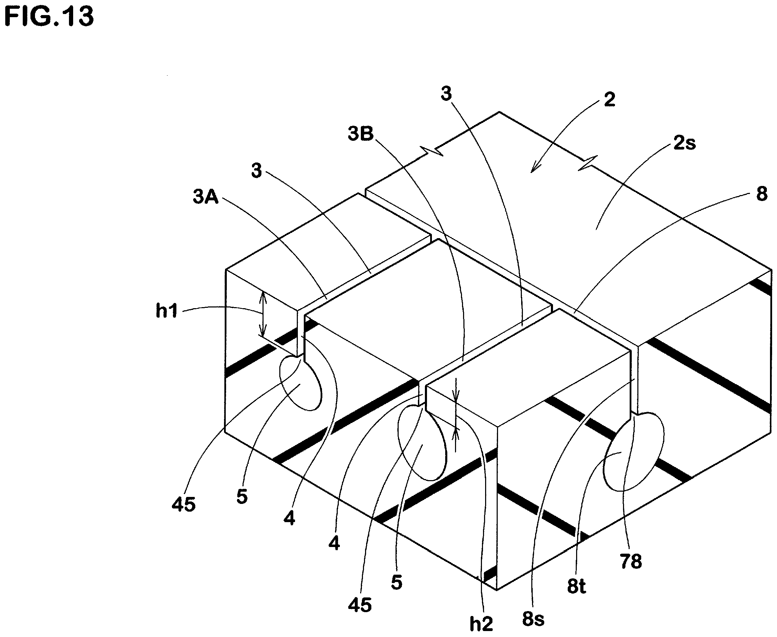

FIG. 13 illustrates a modification of the tread portion 2 of FIG. 8. As illustrated in FIG. 13, the tread portion 2 is preferably provided with at least one circumferential groove 8 extending in the tyre circumferential direction.

The circumferential groove 8 may include a narrow groove portion 8s and a widening portion 8t.

The narrow groove portion 8s opens at the ground contact surface 2s of the tread portion 2. The narrow groove portion 8s has a groove width that closes under the normal load condition.

The widening portion 8t is connected to an inner end in the tyre radial direction of the narrow groove portion 8s. The widening portion 8t has a groove width which is greater than that of the narrow groove portion 8s and which does not close under the normal load condition.

By providing the circumferential groove 8 on the tread portion 2, wet performance of the tyre can be enhanced. At the early stage of wear of the tread portion 2, since the narrow groove portion 8s closes under the normal load condition, the deformation of the tread portion 2 can be suppressed and rolling resistance can be reduced. On the other hand, as the wear of the tread portion 2 progresses, the widening portion 8t, which does not close even under the normal load condition, appears on the ground contact surface 2s, improving drainage performance.

Preferably, the grooved sipes 3 are connected to the circumferential groove 8. As a result, water can flow between the grooved sipes 3 and the circumferential groove 8, enhancing the drainage performance of the tread portion 2.

The grooved sipes 3 may communicate with a circumferential groove that does not include the narrow groove portion 8s (not illustrated). In such a configuration, water flowing into the circumferential groove flows into the widening groove portions 5 of the grooved sipes 3 regardless of whether the sipe portions 4 close, so the drainage performance of the tread portion 2 can be enhanced.

The circumferential groove 8 may extend in a zigzag manner. With such a circumferential groove 8, the narrow groove portion 8s closes under the normal load condition, increasing the axial and circumferential rigidity of the tread portion 2, further improving fuel efficiency.

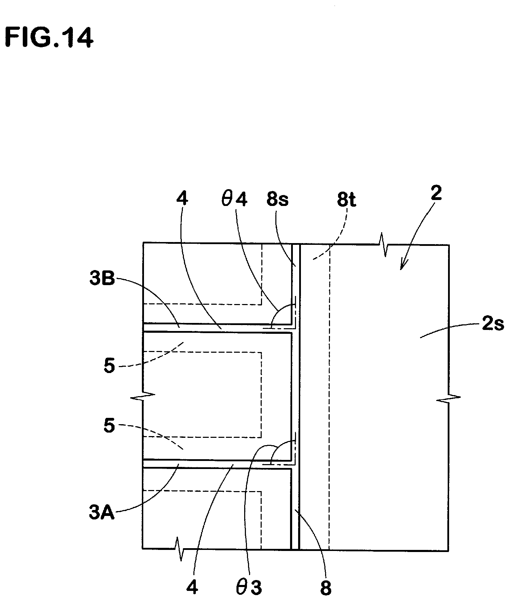

FIG. 14 illustrates a plan view of the ground contact surface 2s of the tread portion 2 of FIG. 13. In FIGS. 13 and 14, the first grooved sipe 3A and the second grooved sipe 3B are arranged on one side of the circumferential grooves 8 in the tyre axial direction.

It is preferable that the sipe portion 4 of the second grooved sipe 3B is in communication with the narrow groove portion 8s of the circumferential groove 8 at an angle θ4 of from 60 to 120 degrees with respect to the narrow groove portion 8s. Thus, traction performance of the tread portion 2 can be improved. Similarly, it is preferable that the sipe portion 4 of the first grooved sipe 3A is in communication with the narrow groove portion 8s of the circumferential grooves 8 at an angle θ3 of from 60 to 120 degrees with respect to the narrow groove portion 8s.

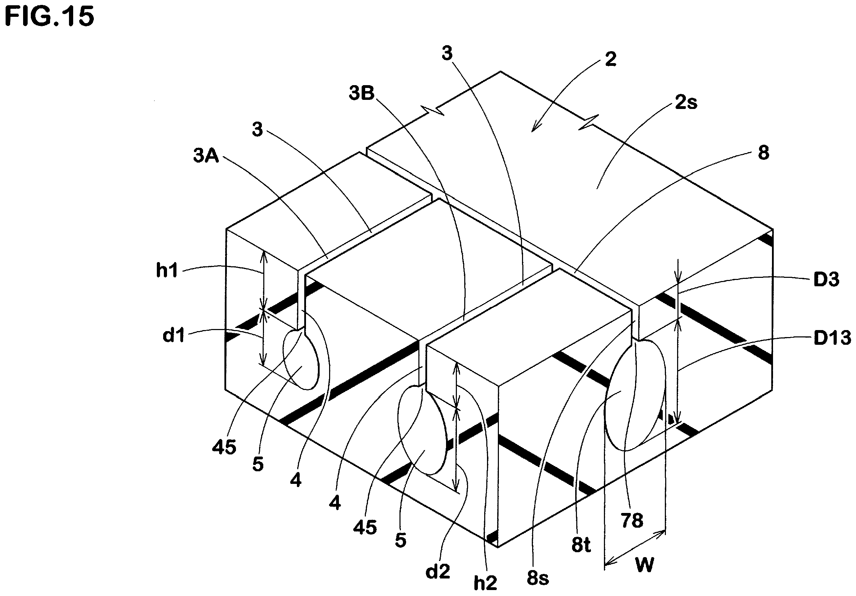

FIG. 15 is a perspective view showing another modification of the tread portion 2 of FIG. 13. As illustrated in FIG. 15, it is preferable that a length D13 in the tyre radial direction of the widening portion 8t of the circumferential groove 8n is greater than a width W (e.g., the maximum groove width) of the widening portion 8t of the circumferential groove 8. This can prevent wet performance of the tread portion 2 from changing rapidly as wear progresses, and makes it possible to easily secure the wet performance at the end of wear.

It is preferable that the distance h1 and the distance h2 are in a range of from 100% to 150% of a third distance D3 in the tyre radial direction from the ground contact surface 2s to the connected position 78 between the narrow groove portion 8s and the widening portion 8t of the circumferential groove 8.

Since the distance h1 and the distance h2 are equal to or more than 100% of the third distance D3, the widening groove portions 5 of the first grooved sipe 3A and the second grooved sipe 3B communicate with the widening portion 8t of the circumferential groove 8, improving wet performance. In addition, the rolling resistance at the early stage of wear can be reduced. On the other hand, since the distance h1 and the distance h2 are equal to or less than 150% of the third distance D3, the rigidity of the tread portion 2 in the tyre circumferential direction can be maintained. Furthermore, while reducing rolling resistance, the widening portion 8t of the circumferential groove 8 offers better wet performance at the end of wear.

A length d2 in the tyre radial direction of the widening groove portion 5 (the second widening groove portion 5B) of the second grooved sipe 3B is preferably smaller than the length D13 of the widening portion 8t of the circumferential groove 8. A length d1 in the tyre radial direction of the widening groove portion 5 (the first widening groove portion 5A) of the first grooved sipe 3A is preferably smaller than the length D13 of the widening portion 8t of the circumferential groove 8. The above configuration can maintain the rigidity of the tread portion 2 in the tyre circumferential direction and reduce rolling resistance, while at the last stage of tread wear, the widening portion 8t of the circumferential grooves 8 can offer better wet performance.

The lengths d1 and d2 in the tyre radial direction of the widening groove portions 5 of the grooved sipes 3 are preferably in a range of from 30% to 50% of the length D13 of the widening portion 8t of the circumferential groove 8.

When the lengths d1 and d2 are equal to or more than 30% of the length D13, wet traction performance of the tread portion 2 at the end of wear can be improved. When the lengths d1 and d2 are equal to or less than 50% of the length D13, it is possible to suppress a decrease in rigidity of the tread portion 2 in the tyre circumferential direction and reduce rolling resistance.

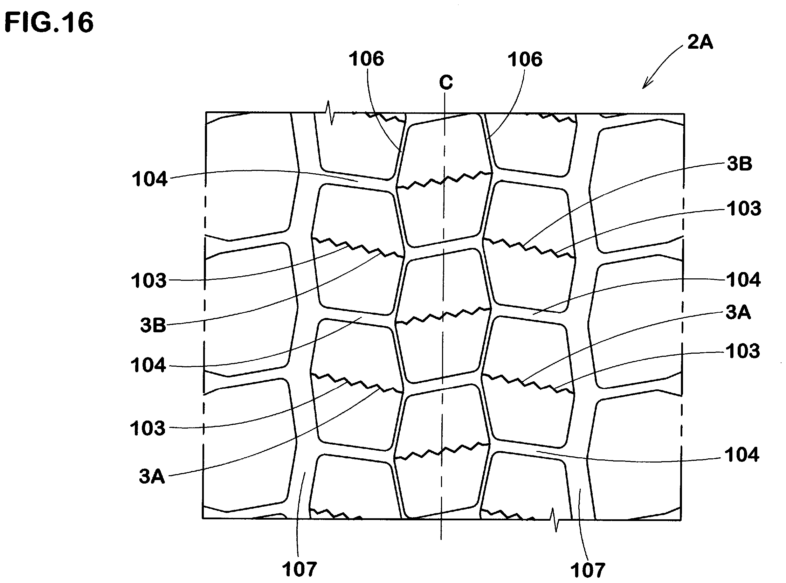

FIG. 16 illustrates a plan view of a tread portion 2A including the configuration of the tread portion 2.

The tread portion 2A is provided with a pair of circumferential grooves 106 extending in the tyre circumferential direction and a plurality of lateral grooves 103 extending in the tyre axial direction.

The circumferential grooves 106 are arranged such that the tyre equator C is located therebetween. The circumferential grooves 106 extend in a zigzag manner.

The lateral grooves 103 are arranged axially outside the pair of circumferential grooves 106. The lateral groove 103 communicates with the circumferential grooves 106.

Each circumferential groove 106 includes the narrow groove portion 8s and the widening portion 8t shown in FIG. 13. The lateral grooves 103 include some first grooved sipes 3A and some second grooved sipes 3B shown in FIG. 13. The first grooved sipes 3A and the second grooved sipes 3B each include the sipe portion 4 and the widening groove portion 5 shown in FIG. 13.

The tread portion 2A having the above configuration has the same effect as the tread portion 2.

A pair of wide circumferential grooves 107 having a groove width that does not close under the normal load condition is formed outside the lateral grooves 103 in the tyre axial direction. The wide circumferential grooves 107 are formed in a zigzag shape. The lateral grooves 103 communicate with the wide circumferential grooves 107. As a result, better wet performance can be easily obtained in the vicinity of the shoulder portions from the initial stage of wear to the final stage of wear. The wide circumferential grooves 107 are shoulder circumferential grooves 8B (shown in FIG. 3).

A wide lateral groove 104 having a groove width that does not close under the normal load condition is arranged between the grooved sipes 3 adjacent in the tyre circumferential direction. Each wide lateral groove 104 communicates with the circumferential grooves 106 and/or the wide circumferential grooves 107. As a result, better wet traction performance can be easily obtained from the initial stage of wear to the final stage of wear. The wide lateral grooves 104 are the crown lateral grooves 20 and the middle lateral grooves 21 (shown in FIG. 5).

While the particularly preferable embodiments of the tyre in accordance with the present invention have been described in detail, the present invention is not limited to the illustrated embodiments, but can be modified and carried out in various aspects within the scope of the appended claims.

### [Example]

### [Examples of First embodiment]

Heavy-duty tyres with the basic pattern shown in FIG. 3 were prepared according to the specifications given in Table 1, and the rolling resistance and wet performance of each test tyre were tested. The test methods and common specifications are as follows.
Tire size: 315/70R22.5
Rim size: 22.5x9.00
Internal pressure: 900 kPa
D1 and D2: 15 mm
Di: The same (value Di of Example 6 is the same as Di of Example 1)

### Rolling resistance performance test:

Using a rolling resistance tester, the rolling resistance of each test tyre was measured according to ISO 28580 under the following conditions. The test results are indicated as an index with the reciprocal of the value of Comparative Example 1 set to 100. The larger the value, the better the rolling resistance performance.
Tire load: 31.25 kN
Traveling speed: 80 km/h

### Wet performance test:

Wet performance (wet braking performance) was tested in accordance with R117-02 (ECE Regulation No.117 Revision 2) using the following test vehicle. In this wet performance, the braking distance was measured from the start of braking at a specified initial speed to the stop on a wet road surface. The test results are indicated as an index with the reciprocal of the braking distance in Comparative Example 1 set to 100. The larger the value, the better the wet performance.
Test vehicle: 10-ton truck (2-D vehicle)
Tire load: 75% of standard load capacity
Wet road: water depth 0.5 to 2 mm
Traveling speed: 65 km/h

The test results are shown in Table 1.

**[Table 1]**

| | Comparative ex. 1 | Ex. 1 | Ex. 2 | Ex. 3 | Ex. 4 | Ex. 5 | Ex. 6 | Ex. 7 | Ex. 8 |
|---|---|---|---|---|---|---|---|---|---|
| h1/h2 (%) | - | 110 | 90 | 110 | 110 | 110 | 110 | 110 | 110 |
| d1/Di | - | 0.4 | 0.5 | 0.4 | 0.4 | 0.4 | 0.4 | 0.4 | 0.4 |
| d2/Di | - | 0.5 | 0.4 | 0.5 | 0.5 | 0.5 | 0.5 | 0.5 | 0.5 |
| W1/W2 (%) | 10 | 10 | 10 | 10 | 10 | 10 | 10 | 10 | 10 |
| θ1 (deg.) | - | 115 | 115 | - | 115 | 115 | 115 | 115 | 115 |
| 02 (deg.) | - | 115 | 115 | - | 115 | 115 | 115 | 115 | 115 |
| Ls/Lj | 1.5 | 1.5 | 1.5 | 1.5 | 0.8 | 1.5 | 1.5 | 1.5 | 1.5 |
| Presence of widening groove portions | Presence | Presence | Presence | Presence | Presence | None | Presence | Presence | presence |
| La/Ls | 0.15 | 0.15 | 0.15 | 0.15 | 0.15 | 0.15 | - | 0.15 | 0.15 |
| Ha/Hm | 0.7 | 0.7 | 0.7 | 0.7 | 0.7 | 0.7 | - | 0.7 | 0.7 |
| wg/Wi | 0.2 | 0.2 | 0.2 | 0.2 | 0.2 | 0.2 | 0.2 | - | 0.2 |
| hg/Di | 0.2 | 0.2 | 0.2 | 0.2 | 0.2 | 0.2 | 0.2 | - | 0.2 |
| Presence of overlapping of crown lateral grooves and middle grooved sipes | Presence | Presence | Presence | Presence | Presence | Presence | Presence | Presence | None |
| Rolling resistance performance [index: Larger is better.] | 100 | 105 | 105 | 100 | 102 | 102 | 107 | 105 | 105 |
| Wet performance [index: Larger is better.] | 100 | 115 | 110 | 118 | 112 | 118 | 110 | 110 | 110 |

As a result of the test, it is confirmed that the tyres of the examples have improved wet performance while maintaining rolling resistance performance.

### [Examples of Second embodiment]

### The second embodiment

Pneumatic tyre of size 315/70R22.5 with a basic pattern of FIG. 16 were prepared according to the specifications given in Table 2, and these fuel consumption performance and wet performance at the new and the last stage of wear were evaluated. The wet performance at the last stage of wear was tested using each tyre that had the tread portion of the rubber removed by buffing until the remaining circumferential grooves were 3 mm (hereafter, the same is applied). The specifications of the tested tyres, which are not listed in Table 2, are the same. For example, the distance h2 is 8.5 mm and the distance h1 is 11.0 mm (the same applies to Tables 3 to 9). The third distance D3 is 8.0 mm (the same in Tables 3 to 6 and 8 to 9). The test procedure is as follows.

### Fuel consumption performance test:

Each test tyre was mounted onto a 22.5x9.00 rim with an internal pressure of 900 kPa, and its rolling resistance was measured at a tyre load of 31.25 kN and a speed of 80 km/h using a rolling resistance tester. The test results are indicated as an index with Comparative example 11 as 100, where larger values indicate lower rolling resistance and higher fuel efficiency.

### Wet Performance test:

The wet performance of each test tyre was tested in accordance with the UN-ECE R117 certification test. That is, each test tyre was driven on a wet road surface of 0.5 mm depth at a speed of 65 km/h plus/minus 2 km/h with a tyre load of 75% of the load index, and the braking distance was measured. The test results are indicated as an index with Comparative example 11 as 100, where larger value indicates a shorter braking distance and superior wet performance.

**[Table 2]**

| | Comparative example 11 | Ex. 11 |
|---|---|---|
| First grooved sipes | presence | presence |
| Second grooved sipes | none | presence |
| Fuel consumption performance (index) | 100 | 100 |
| Wet performance (new) (index) | 100 | 100 |
| Wet performance (last stage of wear) (index) | 100 | 110 |

As shown in Table 2, it is confirmed that the tyres in the example have significantly improved wet performance at the last stage of wear compared to the comparative examples, while maintaining the same level of fuel consumption and wet performance at the new.

The above sizes of pneumatic tyres with the basic pattern of FIG. 16 were tested according to the specifications in Table 3, and their fuel consumption performance and wet performance at the new and the last stage of wear were evaluated in the same manner as above. The specifications of each test tyre, which are not listed in Table 3, are the same. The test procedure is as follows

### Fuel consumption performance test:

The rolling resistance of each test tyre was measured in the same manner as above. The test results are indicated as an index with Example 12 as 100. The larger the index, the lower the rolling resistance and the higher the fuel consumption performance.

### Wet performance test:

The wet braking distance of each test tyre was measured in the same manner as above. The test results are indicated as an index with Example 12 as 100. The larger the index, the shorter the braking distance and the better the wet performance.

**[Table 3]**

| | Ex. 12 | Ex. 13 |
|---|---|---|
| First grooved sipes | presence | presence |
| Second grooved sipes | presence | presence |
| circumferential grooves | presence | presence |
| Grooved Sipe ends and circumferential grooves | not connected | connected |
| Fuel consumption performance (index) | 100 | 100 |
| Wet performance (new) (index) | 100 | 100 |
| Wet performance (last stage of wear) (index) | 100 | 110 |

The above sizes of pneumatic tyres with the basic pattern of FIG. 16 were tested according to the specifications in Table 4, and as above, the fuel consumption and wet performance at new and the last stage of wear were evaluated. The specifications of each test tyre, which are not listed in Table 4, are the same. The test procedure is as follows.

### Fuel consumption performance test:

The rolling resistance of each test tyre was measured in the same manner as above. The test results are indicated as an index with the value of Example 14 being 100. The larger the index, the lower the rolling resistance and the higher the fuel consumption performance.

### Wet performance test:

The wet braking distance of each test tyre was measured in the same manner as above. The test results are indicated as an index with Example 14 as 100. The larger the index, the shorter the braking distance and the better the wet performance.

**[Table 4]**

| | Ex. 14 | Ex. 15 | Ex. 16 |
|---|---|---|---|
| First grooved sipes | presence | presence | presence |
| Second grooved sipes | presence | presence | presence |
| circumferential grooves | presence | presence | presence |
| Grooved Sipe ends and circumferential grooves | connected | connected | connected |
| Relation between D13 and W | D13<W | D13=W | D13>W |
| Fuel consumption performance (index) | 100 | 100 | 100 |
| Wet performance (new) (index) | 100 | 100 | 100 |
| Wet performance (last stage of wear) (index) | 100 | 105 | 110 |

The above sizes of pneumatic tyres with the basic pattern of FIG. 16 were tested according to the specifications in Table 5, and as above, the fuel consumption and wet performance at the new and the last stage of wear were evaluated. The specifications of each test tyre, which are not listed in Table 5, are the same. The test procedure is as follows.

### Fuel consumption performance test:

The rolling resistance of each test tyre was measured in the same manner as above. The test results are indicated as an index with the value of Example 19 being 100. The larger the index, the lower the rolling resistance and the higher the fuel consumption performance.

### Wet performance test:

The wet braking distance of each test tyre was measured in the same manner as above. The test results are indicated as an index with Example 19 as 100. The larger the index, the shorter the braking distance and the better the wet performance.

**[Table 5]**

| | Ex. 17 | Ex. 18 | Ex. 19 | Ex. 20 | Ex. 21 |
|---|---|---|---|---|---|
| First grooved sipes | presence | presence | presence | presence | presence |
| Second grooved sipes | presence | presence | presence | presence | presence |
| circumferential grooves | presence | presence | presence | presence | presence |
| Grooved Sipe ends and circumferential grooves | connected | connected | connected | connected | connected |
| D3 / (D3+D13) (%) | 25 | 40 | 50 | 60 | 80 |
| Fuel consumption performance (index) | 80 | 90 | 100 | 110 | 115 |
| Wet performance (new) (index) | 100 | 100 | 100 | 100 | 100 |
| Wet performance (last stage of wear) (index) | 115 | 110 | 100 | 90 | 80 |

The above sizes of pneumatic tyres with the basic pattern of FIG. 16 were tested according to the specifications in Table 6, and as above, the fuel consumption and wet performance at the new and the last stage of wear were evaluated. The specifications of each test tyre, which are not listed in Table 6, are the same. The test procedure is as follows.

### Fuel consumption performance test:

The rolling resistance of each test tyre was measured in the same manner as above. The test results are indicated as an index with the value of Example 24 being 100. The larger the index, the lower the rolling resistance and the higher the fuel consumption performance.

### Wet performance test:

The wet braking distance of each test tyre was measured in the same manner as above. The test results are indicated as an index with Example 24 as 100. The larger the index, the shorter the braking distance and the better the wet performance.

**[Table 6]**

| | Ex. 22 | Ex. 23 | Ex. 24 | Ex. 25 | Ex. 26 |
|---|---|---|---|---|---|
| First grooved sipes | presence | presence | presence | presence | presence |
| Second grooved sipes | presence | presence | presence | presence | presence |
| Circumferential grooves | presence | presence | presence | presence | presence |
| Grooved Sipe ends and circumferential grooves | connected | connected | connected | connected | connected |
| θ3,θ4(^{°} ) | 45 | 60 | 90 | 120 | 135 |
| Fuel consumption performance (index) | 90 | 95 | 100 | 95 | 90 |
| Wet performance (new) (index) | 100 | 100 | 100 | 100 | 100 |
| Wet performance (last stage of wear) (index) | 100 | 100 | 100 | 100 | 100 |

The above sizes of pneumatic tyres with the basic pattern of FIG. 16 were tested according to the specifications in Table 7, and as above, the fuel consumption and wet performance at the new and the last stage of wear were evaluated. The specifications of each test tyre, which are not listed in Table 7, are the same. The test procedure is as follows.

### Fuel consumption performance test:

The rolling resistance of each test tyre was measured in the same manner as above. The test results are indicated as an index with the value of Example 29 being 100. The larger the index, the lower the rolling resistance and the higher the fuel consumption performance.

### Wet performance test:

The wet braking distance of each test tyre was measured in the same manner as above. The test results are indicated as an index with Example 29 as 100. The larger the index, the shorter the braking distance and the better the wet performance.

**[Table 7]**

| | Ex. 27 | Ex. 28 | Ex. 29 | Ex. 30 | Ex. 31 |
|---|---|---|---|---|---|
| First grooved sipes | presence | presence | presence | presence | presence |
| Second grooved sipes | presence | presence | presence | presence | presence |
| Circumferential grooves | presence | presence | presence | presence | presence |
| Grooved Sipe ends and circumferential grooves | connected | connected | connected | connected | connected |
| h1 / D3(%) | 75 | 100 | 125 | 150 | 175 |
| Fuel consumption performance (index) | 95 | 100 | 100 | 100 | 100 |
| Wet performance (new) (index) | 100 | 100 | 100 | 100 | 100 |
| Wet performance (last stage of wear) (index) | 90 | 95 | 100 | 95 | 90 |

The above sizes of pneumatic tyres with the basic pattern of FIG. 16 were tested according to the specifications in Table 8, and as above, the fuel consumption and wet performance at the new and the last stage of wear were evaluated. The specifications of each test tyre, which are not listed in Table 8, are the same. The test procedure is as follows.

### Fuel consumption performance test:

The rolling resistance of each test tyre was measured in the same manner as above. The test results are indicated as an index with the value of Example 34 being 100. The larger the index, the lower the rolling resistance and the higher the fuel consumption performance.

### Wet performance test:

The wet braking distance of each test tyre was measured in the same manner as above. The test results are indicated as an index with Example 34 as 100. The larger the index, the shorter the braking distance and the better the wet performance.

**[Table 8]**

| | Ex. 32 | Ex. 33 | Ex. 34 | Ex. 35 | Ex. 36 |
|---|---|---|---|---|---|
| First grooved sipes | presence | presence | presence | presence | presence |
| Second grooved sipes | presence | presence | presence | presence | presence |
| Circumferential grooves | presence | presence | presence | presence | presence |
| Grooved Sipe ends and circumferential grooves | connected | connected | connected | connected | connected |
| d2 / D13 (%) | 20 | 30 | 40 | 50 | 60 |
| Fuel consumption performance (index) | 110 | 105 | 100 | 95 | 90 |
| Wet performance (new) (index) | 100 | 100 | 100 | 100 | 100 |
| Wet performance (last stage of wear) (index) | 90 | 95 | 100 | 105 | 110 |

The above sizes of pneumatic tyres with the basic pattern of FIG. 16 were tested according to the specifications in Table 9, and as above, the fuel consumption and wet performance at the new and the last stage of wear were evaluated. The specifications of each test tyre, which are not listed in Table 9, are the same. The test procedure is as follows.

### Fuel consumption performance test:

The rolling resistance of each test tyre was measured in the same manner as above. The test results are indicated as an index with the value of Example 39 being 100. The larger the index, the lower the rolling resistance and the higher the fuel consumption performance.

### Wet performance test:

The wet braking distance of each test tyre was measured in the same manner as above. The test results are indicated as an index with Example 39 as 100. The larger the index, the shorter the braking distance and the better the wet performance.

**[Table 9]**

| | Ex. 37 | Ex. 38 | Ex. 39 | Ex. 40 | Ex. 41 |
|---|---|---|---|---|---|
| First grooved sipes | presence | presence | presence | presence | presence |
| Second grooved sipes | presence | presence | presence | presence | presence |
| Circumferential grooves | presence | presence | presence | presence | presence |
| Grooved Sipe ends and circumferential grooves | connected | connected | connected | connected | connected |
| d1 / D13 (%) | 20 | 30 | 40 | 50 | 60 |
| Fuel consumption performance (index) | 110 | 105 | 100 | 95 | 90 |
| Wet performance (new) (index) | 100 | 100 | 100 | 100 | 100 |
| Wet performance (last stage of wear) (index) | 90 | 95 | 100 | 105 | 110 |

## Claims

1. A tyre (1) comprising:
a tread portion (2) having a ground contact surface (2s),
the tread portion (2) comprising a crown land portion (11) located nearest to a tyre equator (C), a middle land portion (12) adjacent to the crown land portion (11), a crown circumferential groove (8A) between the crown land portion (11) and the middle land portion (12), and a shoulder circumferential groove (8B) located outwardly in a tyre axial direction of the middle land portion (12),
the crown land portion (11) being divided into a plurality of crown blocks (11R) by a plurality of crown lateral grooves (20) extending across the crown land portion (11),
the middle land portion (12) being divided into a plurality of middle blocks (12R) by a plurality of middle lateral grooves (21) extending across the middle land portion (12),
the tread portion (2) being provided with a plurality of grooved sipes (3) opening to the ground contact surface and extending in a tyre axial direction, wherein
the plurality of grooved sipes (3) comprises a first grooved sipe (3A) and a second grooved sipe (3B),
the first grooved sipe (3A) comprises a first sipe portion (4A) and a first widening groove portion (5A) connected to an inner side of the first sipe portion (4A) in a tyre radial direction and having a greater width than that of the first sipe portion (4A),
the second grooved sipe (3B) comprises a second sipe portion (4B) and a second widening groove portion (5B) connected to an inner side of the second sipe portion (4B) in the tyre radial direction and having a greater width than that of the second sipe portion (4B), and
a distance h1 in the tyre radial direction from the ground contact surface (2s) to an outer end (6a) of the first widening groove portion (5A) is different from a distance h2 in the tyre radial direction from the ground contact surface (2s) to an outer end (6b) of the second widening groove portion (5B),
**characterized in that**
each crown block (11R) is provided with a single first grooved sipe (3A), i.e. each crown block (11R) is provided with a grooved sipe only and said grooved sipe is a first grooved sipe (3A), and
each middle block (12R) is provided with a single second grooved sipe (3B), i.e. each middle block (12R) is provided with a grooved sipe only and said grooved sipe is a second grooved sipe (3B).

2. The tyre (1) according to claim 1, wherein
each of the first sipe portion (4A) and the second sipe portion (4B) has a width that closes under a normal load condition, and
each of the first widening groove portion (5A) and the second widening groove portion (5B) has a width that does not close under the normal load condition.

3. The tyre (1) according to claim 1 or 2, wherein
the distance h1 is in a range of from 110% to 150% of the distance h2.

4. The tyre (1) according to any one of claims 1 to 3, wherein
a groove width (W1) of the crown circumferential groove (8A) is smaller than a groove width (W2) of the shoulder circumferential groove (8B).

5. The tyre (1) according to claim 4, wherein
the first grooved sipe (3A) and the second grooved sipe (3B) are in communication with the crown circumferential groove (8A).

6. The tyre (1) according to claim 4 or 5, wherein
the crown circumferential groove (8A) comprises an outer portion (15) extending inwardly in the tyre radial direction from the ground contact surface (2s), and an inner portion (16) connected to an inner side of the outer portion (15) in the tyre radial direction and having a widening portion (16a) whose groove width continuously increases inwardly in the tyre radial direction.

7. The tyre (1) according to claim 6, wherein
the outer portion (15) has a groove width that decreases inwardly continuously in the tyre radial direction.

8. The tyre (1) according to claim 4 or 5, wherein
the crown circumferential groove (8A) comprises a narrow groove portion (8s) and a widening portion (8t),
the narrow groove portion (8s) has a groove width that closes at least partially under a normal load condition of the tyre,
the widening portion (8t) is connected to a radial inner edge of the narrow groove portion (8s),
the widening portion (8t) has a groove width larger than a groove width of the narrow groove portion (8s), and
the groove width of the widening portion (8t) does not close under the normal load condition.

9. The tyre (1) according to claim 8, wherein
a length in the tyre radial direction of the widening portion (8t) is greater than the groove width of the widening portion (8t).

10. The tyre (1) according to claim 8 or 9, wherein
the crown circumferential groove (8A) has a connecting position (78) between the narrow groove (8s) and the widening portion (8t),
the connecting position (78) is located by a third distance (D3) in the tyre radial direction from the ground contact surface (2s), and
the distance h1 and the distance h2 is in a range of from 100% to 150% of the third distance (D3).

11. The tyre (1) according to any one of claims 8 to 10, wherein
lengths in the tyre radial direction of the first and second widening groove portions (5A, 5B) are smaller than a length in the tyre radial direction of the widening portion (8t) of the crown circumferential groove (8A).

12. The tyre according to claim 11, wherein
a length in the tyre radial direction of the first widening groove portion (5A) and the second widening groove portion (5B) is in a range of from 30% to 50% of a length in the tyre radial direction of the widening portion of the crown circumferential groove (8t).

## Patentansprüche

1. Reifen (1), umfassend:
einen Laufflächenabschnitt (2) mit einer Bodenkontaktfläche (2s),
wobei der Laufflächenabschnitt (2) einen Kronenlandabschnitt (11), der sich am nächsten zu einem Reifenäquator (C) befindet, einen mittleren Landabschnitt (12), der benachbart zu dem Kronenlandabschnitt (11) ist, eine Kronenumfangsrille (8A) zwischen dem Kronenlandabschnitt (11) und dem mittleren Landabschnitt (12) und eine Schulterumfangsrille (8B), die in einer Reifenaxialrichtung außen von dem mittleren Landabschnitt (12) angeordnet ist, umfasst,
wobei der Kronenlandabschnitt (11) durch eine Vielzahl von Kronenquerrillen (20), die sich über den Kronenlandabschnitt (11) erstrecken, in eine Vielzahl von Kronenblöcken (11R) unterteilt ist,
wobei der mittlere Landabschnitt (12) durch eine Vielzahl von mittleren Querrillen (21), die sich über den mittleren Landabschnitt (12) erstrecken, in eine Vielzahl von mittleren Blöcken (12R) unterteilt ist,
wobei der Laufflächenabschnitt (2) mit einer Vielzahl von gekerbten Feinschnitten (3) versehen ist, die sich zu der Bodenkontaktfläche öffnen und sich in einer Reifenaxialrichtung erstrecken, wobei
die Vielzahl von gekerbten Feinschnitten (3) einen ersten gekerbten Feinschnitt (3A) und einen zweiten gekerbten Feinschnitt (3B) umfasst,
der erste gekerbte Feinschnitt (3A) einen ersten Feinschnittabschnitt (4A) und einen ersten sich verbreiternden Rillenabschnitt (5A), der mit einer Innenseite des ersten Feinschnittabschnitts (4A) in einer Reifenradialrichtung verbunden ist und eine größere Breite als die des ersten Feinschnittabschnitts (4A) aufweist, umfasst,
der zweite gekerbte Feinschnitt (3B) einen zweiten Feinschnittabschnitt (4B) und einen zweiten sich verbreiternden Rillenabschnitt (5B), der mit einer Innenseite des zweiten Feinschnittabschnitts (4B) in der Reifenradialrichtung verbunden ist und eine größere Breite als die des zweiten Feinschnittabschnitts (4B) aufweist, umfasst, und
ein Abstand h1 in der Reifenradialrichtung von der Bodenkontaktfläche (2s) zu einem äußeren Ende (6a) des ersten sich verbreiternden Rillenabschnitts (5A) sich von einem Abstand h2 in der Reifenradialrichtung von der Bodenkontaktfläche (2s) zu einem äußeren Ende (6b) des zweiten sich verbreiternden Rillenabschnitts (5B) unterscheidet,
**dadurch gekennzeichnet, dass**
jeder Kronenblock (11R) mit einem einzelnen ersten gekerbten Feinschnitt (3A) versehen ist, d. h. jeder Kronenblock (11R) nur mit einem gekerbten Feinschnitt versehen ist und der gekerbte Feinschnitt ein erster gekerbter Feinschnitt (3A) ist, und
jeder mittlere Block (12R) mit einem einzelnen zweiten gekerbten Feinschnitt (3B) versehen ist, d. h. jeder mittlere Block (12R) nur mit einem gekerbten Feinschnitt versehen ist und der gekerbte Feinschnitt ein zweiter gekerbter Feinschnitt (3B) ist.

2. Reifen (1) nach Anspruch 1, wobei
sowohl der erste Feinschnittabschnitt (4A) als auch der zweite Feinschnittabschnitt (4B) eine Breite aufweist, die sich unter einer Normallastbedingung schließt, und
sowohl der erste sich verbreiternde Rillenabschnitt (5A) als auch der zweite sich verbreiternde Rillenabschnitt (5B) eine Breite aufweist, die sich unter der Normallastbedingung nicht schließt.

3. Reifen (1) nach Anspruch 1 oder 2, wobei
der Abstand h1 in einem Bereich von 110 % bis 150 % des Abstands h2 liegt.

4. Reifen (1) nach einem der Ansprüche 1 bis 3, wobei
eine Rillenbreite (W1) der Kronenumfangsrille (8A) kleiner als eine Rillenbreite (W2) der Schulterumfangsrille (8B) ist.

5. Reifen (1) nach Anspruch 4, wobei
der erste gekerbte Feinschnitt (3A) und der zweite gekerbte Feinschnitt (3B) mit der Kronenumfangsrille (8A) in Verbindung stehen.

6. Reifen (1) nach Anspruch 4 oder 5, wobei
die Kronenumfangsrille (8A) einen äußeren Abschnitt (15), der sich in der Reifenradialrichtung von der Bodenkontaktfläche (2s) nach innen erstreckt, und einen inneren Abschnitt (16), der mit einer Innenseite des äußeren Abschnitts (15) in der Reifenradialrichtung verbunden ist und einen sich verbreiternden Abschnitt (16a) aufweist, dessen Rillenbreite in der Reifenradialrichtung kontinuierlich nach innen zunimmt, umfasst.

7. Reifen (1) nach Anspruch 6, wobei
der äußere Abschnitt (15) eine Rillenbreite aufweist, die in der Reifenradialrichtung kontinuierlich nach innen abnimmt.

8. Reifen (1) nach Anspruch 4 oder 5, wobei
die Kronenumfangsrille (8A) einen schmalen Rillenabschnitt (8s) und einen Verbreiterungsabschnitt (8t) umfasst,
der schmale Rillenabschnitt (8s) eine Rillenbreite aufweist, die sich unter einer Normallastbedingung des Reifens zumindest teilweise schließt,
der Verbreiterungsabschnitt (8t) mit einer radialen Innenkante des schmalen Rillenabschnitts (8s) verbunden ist,
der Verbreiterungsabschnitt (8t) eine Rillenbreite aufweist, die größer als eine Rillenbreite des schmalen Rillenabschnitts (8s) ist, und
die Rillenbreite des Verbreiterungsabschnitts (8t) sich unter der Normallastbedingung nicht schließt.

9. Reifen (1) nach Anspruch 8, wobei
eine Länge in der Reifenradialrichtung des Verbreiterungsabschnitts (8t) größer als die Rillenbreite des Verbreiterungsabschnitts (8t) ist.

10. Reifen (1) nach Anspruch 8 oder 9, wobei
die Kronenumfangsrille (8A) eine Verbindungsposition (78) zwischen der schmalen Rille (8s) und dem Verbreiterungsabschnitt (8t) aufweist,
die Verbindungsposition (78) sich um einen dritten Abstand (D3) in der Reifenradialrichtung von der Bodenkontaktfläche (2s) befindet, und
der Abstand h1 und der Abstand h2 in einem Bereich von 100 % bis 150 % des dritten Abstands (D3) liegen.

11. Reifen (1) nach einem der Ansprüche 8 bis 10, wobei
Längen in der Reifenradialrichtung des ersten und des zweiten Verbreiterungsrillenabschnitts (5A, 5B) kleiner als eine Länge in der Reifenradialrichtung des Verbreiterungsabschnitts (8t) der Kronenumfangsrille (8A) sind.

12. Reifen nach Anspruch 11, wobei
eine Länge in der Reifenradialrichtung des ersten Verbreiterungsrillenabschnitts (5A) und des zweiten Verbreiterungsrillenabschnitts (5B) in einem Bereich von 30 % bis 50 % einer Länge in der Reifenradialrichtung des Verbreiterungsabschnitts der Kronenumfangsrille (8t) liegt.

## Revendications

1. Pneumatique (1) comprenant :
une portion formant bande de roulement (2) ayant une surface de contact au sol (2s),
la portion formant bande de roulement (2) comprenant une portion en relief de couronne (11) située au plus près d'un équateur de pneumatique (C), une portion en relief médiane (12) adjacente à la portion en relief de couronne (11), une rainure circonférentielle de couronne (8A) entre la portion en relief de couronne (11) et la portion en relief médiane (12), et une rainure circonférentielle d'épaulement (8B) située à l'extérieur dans une direction radiale du pneumatique de la portion en relief médiane (12),
la portion en relief de couronne (11) étant divisée en une pluralité de blocs de couronne (11R) par une pluralité de rainures latérales de couronne (20) s'étendant à travers la portion en relief de couronne (11),
la portion en relief médiane (12) étant divisée en une pluralité de blocs médians (12R) par une pluralité de rainures latérales médianes (21) s'étendant à travers la portion en relief médiane (12),
la portion formant bande de roulement (2) étant dotée d'une pluralité de fentes rainurées (3) s'ouvrant sur la surface de contact au sol et s'étendant dans une direction axiale du pneumatique, dans lequel
la pluralité de fentes rainurées (3) comprend une première fente rainurée (3A) et une seconde fente rainurée (3B),
la première fente rainurée (3A) comprend une première portion de fente (4A) et une première portion de rainure en élargissement (5A) connectée à un côté intérieur de la première portion de fente (4A) dans une direction radiale du pneumatique et ayant une largeur supérieure à celle de la première portion de fente (4A),
la seconde fente rainurée (3B) comprend une seconde portion de fente (4B) et une seconde portion de rainure en élargissement (5B) connectée à un côté intérieur de la seconde portion de fente (4B) dans la direction radiale du pneumatique et ayant une largeur supérieure à celle de la seconde portion de fente (4B), et
une distance h1 dans la direction radiale du pneumatique depuis la surface de contact au sol (2s) jusqu'à une extrémité extérieure (6a) de la première portion de rainure en élargissement (5A) est différente d'une distance h2 dans la direction radiale du pneumatique depuis la surface de contact au sol (2s) jusqu'à une extrémité extérieure (6b) de la seconde portion de rainure en élargissement (5B),
**caractérisé en ce que**
chaque bloc de couronne (11R) est doté d'une première fente rainurée (3A) unique, c'est-à-dire que chaque bloc de couronne (11R) est doté d'une fente rainurée seulement, et ladite fente rainurée est une première fente rainurée (3A), et
chaque bloc médian (12R) est doté d'une seconde fente rainurée (3B) unique, c'est-à-dire que chaque bloc médian (12R) est doté d'une fente rainurée seulement, et ladite fente rainurée est une seconde fente rainurée (3B).

2. Pneumatique (1) selon la revendication 1, dans lequel
chacune de la première portion de fente (4A) et de la seconde portion de fente (4B) a une largeur qui se ferme sous une condition de charge normale, et
chacune de la première portion de rainure en élargissement (5A) et de la seconde portion de rainure en élargissement (5B) a une largeur qui ne se ferme pas sous la condition de charge normale.

3. Pneumatique (1) selon la revendication 1 ou 2, dans lequel
la distance h1 est dans une plage allant de 110 % à 150 % de la distance h2.

4. Pneumatique (1) selon l'une quelconque des revendications 1 à 3, dans lequel
une largeur de rainure (W1) de la rainure circonférentielle de couronne (8A) est inférieure à une largeur de rainure (W2) de la rainure circonférentielle d'épaulement (8B).

5. Pneumatique (1) selon la revendication 4, dans lequel
la première fente rainurée (3A) et la seconde fente rainurée (3B) sont en communication avec la rainure circonférentielle de couronne (8A).

6. Pneumatique (1) selon la revendication 4 ou 5, dans lequel
la rainure circonférentielle de couronne (8A) comprend une portion extérieure (15) s'étendant vers l'intérieur dans la direction radiale du pneumatique depuis la surface de contact au sol (2s), et une portion intérieure (16) connectée à un côté intérieur de la portion extérieure (15) dans la direction radiale du pneumatique et ayant une portion en élargissement (16a) dont une largeur de rainure augmente en continu vers l'intérieur dans la direction radiale du pneumatique.

7. Pneumatique (1) selon la revendication 6, dans lequel
la portion extérieure (15) a une largeur de rainure qui diminue vers l'intérieur en continu dans la direction radiale du pneumatique.

8. Pneumatique (1) selon la revendication 4 ou 5, dans lequel
la rainure circonférentielle de couronne (8A) comprend une portion de rainure étroite (8s) et une portion en élargissement (8t),
la portion de rainure étroite (8s) a une largeur de rainure qui se ferme au moins en partie sous une condition de charge normale du pneumatique,
la portion en élargissement (8t) est connectée à un bord intérieur radial de la portion de rainure étroite (8s),
la portion en élargissement (8t) a une largeur de rainure supérieure à une largeur de rainure de la portion de rainure étroite (8s), et
la largeur de rainure de la portion en élargissement (8t) ne se ferme pas sous la condition de charge normale.

9. Pneumatique (1) selon la revendication 8, dans lequel
une longueur dans la direction radiale du pneumatique de la portion en élargissement (8t) est supérieure à la largeur de rainure de la portion en élargissement (8t).

10. Pneumatique (1) selon la revendication 8 ou 9, dans lequel
la rainure circonférentielle de couronne (8A) a une position de connexion (78) entre la rainure étroite (8s) et la portion en élargissement (8t),
la position de connexion (78) est située à raison d'une troisième distance (D3) dans la direction radiale du pneumatique depuis la surface de contact au sol (2s), et
la distance h1 et la distance h2 sont dans une plage allant de 100 % à 150 % de la troisième distance (D3)

11. Pneumatique (1) selon l'une quelconque des revendications 8 à 10, dans lequel
des longueurs dans la direction radiale du pneumatique de la première et de la seconde portion de rainure en élargissement (5A, 5B) sont inférieures à une longueur dans la direction radiale du pneumatique de la portion en élargissement (8t) de la rainure circonférentielle de couronne (8A).

12. Pneumatique (1) selon la revendication 11, dans lequel
une longueur dans la direction radiale du pneumatique de la première portion de rainure en élargissement (5A) et de la seconde portion de rainure en élargissement (5B) est dans une plage allant de 30 % à 50 % d'une longueur dans la direction radiale du pneumatique de la portion en élargissement (8t) de la rainure circonférentielle de couronne.
